# EUROPÄISCHE PATENTSCHRIFT

(11) **EP 2 403 977 B1**
(45) Veröffentlichungstag und Bekanntmachung des Hinweises auf die Patenterteilung: **10.08.2016**
(21) Anmeldenummer: 10707222.5
(22) Anmeldetag: 01.03.2010
(51) Int. Cl.: C23C 18/12

(54) **VERFAHREN ZUR AUSBILDUNG EINER ALUMOSILIKAT-ZEOLITH-SCHICHT AUF EINEM METALLISCHEN SUBSTRAT, DAS BESCHICHTETE SUBSTRAT SOWIE DESSEN VERWENDUNG**
PROCESS FOR PREPARING AN ALUMOSILICATE ZEOLITE COATING ON A METALLIC SUBSTRATE, THE COATED SUBSTRATE AND THE USE THEREOF
PROCÉDÉ DE PRÉPARATION D'UNE COUCHE DE ZÉOLITHE ALUMOSILICATE SUR UN SUBSTRAT MÉTALLIQUE, SUBSTRAT REVÊTU ET SON UTILISATION

(30) Priorität: 03.03.2009 DE 102009011530
(43) Veröffentlichungstag der Anmeldung: 11.01.2012
(73) Patentinhaber: SORTECH AG, 06126 Halle (Saale) (DE)
(72) Erfinder: HERRMANN, Ralph, 06118 Halle (DE); SCHWIEGER, Wilhelm, 91080 Spardorf (DE); BAUER, Jürgen, 96215 Lichtenfels (DE)
(74) Vertreter: Held, Stephan
(86) Internationale Anmeldenummer: PCT/EP2010/001255
(87) Internationale Veröffentlichungsnummer: WO 2010/099919

(56) Entgegenhaltungen:
- DE-A1-102005 038 044
- US-A- 5 310 714
- US-A1- 2006 093 806

## Beschreibung

Die Erfindung betrifft ein Verfahren zur Ausbildung einer Alumosilikat-Zeolith-Schicht auf einem aluminiumhaltigen metallischen Substrat, das in eine wässrige Reaktionsdispersion eingebracht wird, in der als netzwerkbildende Elemente Silizium und gegebenenfalls Aluminium enthalten sind, wobei unabhängig davon, ob Aluminium in der wässrigen Reaktionsdispersion vorliegt oder nicht, das Molverhältnis zwischen dem Aluminium in der wässrigen Reaktionsdispersion, gegebenenfalls 0, zur Summe der in der wässrigen Reaktionsdispersion enthaltenen bezeichneten netzwerkbildenden Elemente zwischen 0 und etwa 0,4 liegt, die das aluminiumhaltige metallische Substrat enthaltende wässrige Reaktionsdispersion erwärmt und dem aluminiumhaltigen metallischen Substrat für den Alumosilikat-Zeolith-Bildungsprozess Aluminium entzogen und die Schicht eines Alumosilikat-Zeoliths auf dem aluminiumhaltigen Substrat durch in-situ-Aufkristallisation ausgebildet wird. Ferner betrifft die Erfindung vorteilhafte Verwendungen des Verfahrenserzeugnisses.

Darüber hinaus betrifft die Erfindung das nach diesem Verfahren erhaltene Erzeugnis in Form eines aluminiumhaltigen Substrats, auf dem eine aluminiumreiche Alumosilikat-Zeolith-Schicht ausgebildet ist, sowie vorteilhafte Verwendungen dieses aluminiumhaltigen Substrats.

Zeolithe sind im engeren mineralogischen Sinne Silikat-Minerale und insbesondere AlumoSilikate komplexer chemischer Struktur, die durch die Ausbildung poröser Tetraeder-Netzwerke (T-Netzwerke) charakterisiert sind. Nach der allgemeineren Definition der IZA (International Zeolithe Association) werden unter Zeolithen solche Materialien verstanden, die T-Netzwerke einer Netzwerkdichte von < 19 T-Atome pro 1000 Å³ aufweisen. Sie zeigen eine Struktur mit inneren Hohlräumen, die molekulare Größen annehmen können. Hieraus ergibt sich die Eigenschaft von Zeolithen, Fremdatome bzw. Fremdmoleküle in ihre poröse Struktur aufnehmen zu können. Beispielsweise können Zeolithe große Mengen an Wasser speichern und bei Erhitzung wieder freigeben. Zeolithe sind in Kontakt mit einem Wärmetauscher besonders zur Wärmetransformation geeignet. Hierzu werden nach einem früheren Stand der Technik entweder Schüttungen geformter Zeolithe oder Zeolithe verwendet, die in offenporige Festkörper, die in thermischem Kontakt mit einem Wärmetauscher stehen, eingebracht sind. Ein derartiger Stand der Technik ergibt sich beispielsweise aus der DE 101 59 652 C2.

Ferner werden Zeolithe in der chemischen Industrie für eine Vielzahl weiterer Anwendungen herangezogen. Dies sind z.B. Ionenaustauschprozesse, wobei meist synthetisch hergestellte Zeolithe in Pulverform einer Kristallgröße von wenigen Mikrometern eingesetzt werden. Außerdem werden Zeolithe als Molekularsiebe verwendet, wobei die Zeolithe als lose Schüttung von Kristallen oder geformten Materialien in ein Filtersystem eingebracht werden kann.

Bei Anwendungen, bei denen Zeolithen Wärme zugeführt wird bzw. Wärme entzogen werden soll, sind lose Zeolith-Schüttungen deshalb ungeeignet, weil ein nur unzureichender thermischer Kontakt zu den angrenzenden Wärmetauscherstrukturen erreicht werden kann. Außerdem muss insbesondere für Adsorptionsanwendungen das üblicherweise als Sorptiv bezeichnete Arbeitsmedium dem Zeolith als Sorbens-Material in effektiver Weise zugeführt werden. Daher wird für solche Anwendungen der als Pulver synthetisierte Zeolith mit Hilfe eines Bindemittels zu Pellets verformt. Durch die meisten Bindemittel werden die anwendungsrelevanten Eigenschaften der Zeolithe aber nachteilig beeinflusst. Außerdem kann bei der Verwendung von Pellets kein hinreichender thermischer Kontakt zu angrenzenden Wärmetauschern gewährleistet werden. Daher werden Systeme aus Wärmetauschern vorgeschlagenen, auf die eine Schicht eines Zeoliths aufgebracht wird. Für die bekannten Beschichtungsverfahren von Substraten mit Zeolithen ist das zweistufige Vorgehen typisch. Hier wird zunächst ein ZeolithPulver synthetisiert, das mechanisch nachbehandelt werden kann, so durch Zerkleinerungs- oder Mahlschritte, wodurch ein pulverförmiger Zeolith eingestellter Teilchengröße entsteht. Das derartig synthetisierte oder vorsynthetisierte Zeolith-Material wird in der Regel mit einem Bindemittel vermischt und darauf als *"Coating"* auf das Trägersubstrat aufgebracht. Nachteilig an der beschriebenen Verfahrensweise ist es, dass das Aufbringen gleichmäßig starker ZeolithSchichten auf der Gesamtoberfläche des Wärmetauschers, insbesondere bei komplexen, dreidimensionalen Wärmetauscherstrukturen, schwierig ist. Außerdem weist ein derartiges postsynthetisches Beschichtungsverfahren eine nachteilig große Anzahl von Herstellungsschritten auf. Ferner beeinflussen die meisten üblichen Bindemittel die relevanten Eigenschaften der Zeolithe, da sich die bindenden Moleküle und Partikel auf der Oberfläche der Zeolith-Kristalle anlagern. Auch ist die erreichbare Wärmeleitung in der Zeolithschicht und von der Zeolithschicht zum Substrat noch zu gering.

Die US 2003/0091872 A1 beschreibt ein Verfahren zum Herstellen einer Zeolith-Schicht auf einem Metall, wie Aluminium, Nickel, Stahl oder Titan. Hierauf werden klassische Aluminiumsilikat-Schichten in einer wässrigen Reaktionsdispersion eines pH-Wertes von neutral bis 12 ausgebildet. Die Reaktionsdispersion enthält auch Aluminium. Durch ein direktes Aufwachsen der Zeolithe auf das Substrat (in-situ Kristallisation) wird die Haftung der Zeolith-Schicht auf dem Substrat verbessert. Die Si- und AI-Quellen in der Lösung liefern die Bauelemente für die auf dem Substrat auszubildenden Alumosilikat-Zeolithe. Im Falle eines aluminiumhaltigen metallischen Substrats können auch einige Aluminiumatome des Substrats in das Alumosilikat-Zeolith-Netzwerk eingebaut werden.

Ein sehr interessanter Vorschlag, auf einem aluminiumhaltigen metallischen Substrat eine Schicht aus einem Alumosilikat-Zeolith auszubilden, ergibt sich aus der WO 2006/08421 A2. Dieser Stand der Technik geht über denjenigen hinaus, der vorstehend dargestellt ist; denn hier wird mit einem deutlichen Aluminium-Unterschuss in der Reaktionsdispersion gearbeitet. Zudem verlangt dieser auch zwingend, dass bei der Ausbildung der Zeolith-Schicht auf dem aluminiumhaltigen Substrat als netzwerkbildendes Element Phosphor in der wässrigen Reaktionsdispersion, in die das aluminiumhaltige metallische Substrat eingebracht wird, enthalten ist. Hierdurch werden Aluminiumphosphat-Zeolithe ausgebildet, die vorteilhaften Anwendungen zugeführt werden können.

Es gab viele Versuche, auch alumosilikatische Zeolithe direkt auf metallische Träger, wie Edelstahl, aufwachsen zu lassen. Positive Resultate wurden für aluminiumarme Zeolithe (Typ MFI) veröffentlicht. Hier kommt es durch heterogene Keimbildung zur Kristallisation auf dem Träger. Als erfolgreiche Methode für aluminiumreiche Alumosilikate wird eine 3-Stufenvariante mit Keimeinbettung in eine zuvor auf Stahl hergestellte MFI-Schicht und eine folgende Wachstumsphase für den aluminiumreichen Zeolith (vgl. R. Monuz et al. Microporous and Mesoporous Meaterials 86 (2005), 243-248) sowie eine Kristallisation auf Stahl, der durch Vorbehandlungen eine deutlich vergrößerte Oberfläche aufwies, (vgl. L. Bonaccorsi, E. Proverbio, Microporous and Mesoporous Materials, 74 (2004), 221-229) beschrieben. Interessant ist besonders Aluminium als Trägermaterial, da auch dieses ein netzwerkbildendes Element der Zeolithe darstellt, leicht ist und eine sehr gute Wärmeleitfähigkeit besitzt. Mit Aluminium konnte bisher unter Anwendung eines Aluminiumunterschusses nur der aluminiumarme Zeolithtyp MFI (Si/Al-Verhältnis aus NH₃-TPD-Messungen 15-16) hergestellt werden (vgl. F. Scheffler et al. Microporous and Mesoporous Materials 67 (2004) 53-59). Die Umsetzung dieser Versuche auf aluminiumreiche Zeolithschichten im Sinne der Erfindung führen zur unkontrollierten Auflösung des aluminiumhaltigen Substrats.

Der Erfindung lag daher die Aufgabe zugrunde, den eingangs geschilderten Stand der Technik so weiterzubilden, dass auf einem aluminiumhaltigen metallischen Substrat eine vorteilhafte Schicht eines aluminiumreichen Alumosilikat-Zeoliths ausgebildet werden kann, ohne die Anwendungsmöglichkeiten des beschichteten Substrats einzuschränken. Hierbei soll auch eine gute Haftung zwischen der Zeolith-Schicht und dem aluminiumhaltigen metallischen Substrat erreicht werden. Dies soll durch eine einfache Verfahrensführung und mit wenigen Verfahrensschritten möglich werden.

Erfindungsgemäß wird diese Aufgabe durch ein Verfahren der eingangs geschilderten Art dadurch gelöst, dass auf dem aluminiumhaltigen metallischen Substrat eine Schicht eines aluminiumreichen Alumosilikat-Zeoliths eines Si/Al-Verhältnisses von weniger als 5 ausgebildet wird, indem in die wässrige Reaktionsdispersion eine Si-Quelle in einer zur Ausbildung des Si/Al-Verhältnisses von weniger als 5 ausreichenden Menge und eine AI-Quelle, die der Anforderung des molaren Unterschusses genügt, sowie das aluminiumhaltige metallische Substrat eingebracht werden, wobei der pH-Wert der wässrigen Reaktionsdispersion alkalisch eingestellt und die Schicht des aluminiumreichen Alumosilikat-Zeoliths auf das aluminiumhaltige metallische Substrat kristallisiert wird.

Wenn im Rahmen der vorliegenden Erfindung auf einem aluminiumhaltigen metallischen Substrat eine Schicht aus einem aluminiumreichen Alumosilikat-Zeolith ausgebildet wird, dann ist dies weitestgehend zu verstehen. Nur beispielhaft, wenn auch bevorzugt, sollen folgende aluminiumreiche Alumosilikat-Zeolithe herausgestellt werden: FAU (Zeolith X und Y), LTA, CHA, MOR und GIS. Diese bevorzugten aluminiumreichen Alumosilikat-Zeolithe erfüllen die weitergehende Forderung gemäß der Erfindung, dass darin das Si/Al-Verhältnis weniger als 5 beträgt. Bevorzugt ist es, dass dieses Verhältnis kleiner als 4, insbesondere kleiner als 3,5 ist. Das Si/Al-Verhältnis kann bis zu einem Wert von 1 führen, der prinzipiell nicht unterschritten werden kann. Diese Zeolithe zeichnen sich aus durch eine Wassersorptionskapazität bei 25°C von mindestens 12 % oder mehr, bezogen auf die reine Masse des Zeolithen, und durch IUPAC Typ I Gleichgewichtsisothermen für Wasserdampf (vgl. Sing et al, Pure Appl. Chem. 57 (1985) S. 603) aus und sind nach Rodrizez-Reinoso et al. (vgl. Rodrizez-Reinoso et al. Studies in Surface Science and Catalysis 62 (1991) S. 685-692) den hydrophilen "Gruppe 1" Adsorbentien zuzuordnen. Ein höherer Anteil an Aluminium führt in der Regel zu einer festeren Anhaftung der ausgebildeten Zeolith-Schicht auf dem aluminiumhaltigen Substrat.

Ziel der Erfindung ist es, wie dargestellt, auf einem aluminiumhaltigen metallischen Substrat eine Schicht aus einem aluminiumreichen Alumosilikat-Zeolith der bezeichneten Anforderungen auszubilden. Auch hier unterliegt diese keinen relevanten Einschränkungen. Grundsätzlich kann es sich um ein Substrat aus metallischem Aluminium handeln. Andere Elemente können zur Bildung einer Legierung einbezogen werden. Typische Aluminiumlegierungen sind beispielsweise AlFe1,5 Mn 0,5 oder AlMg3. Grundsätzlich können spezielle Legierungsbestandteile im Hinblick auf eine vorteilhafte Auswirkung für den jeweiligen Anwendungsfall einbezogen werden, wie beispielsweise Silizium.

Von besonderer Bedeutung ist es, dass das Aluminium entweder in der wässrigen Reaktionsdispersion nicht vorliegt, wobei das angesprochene Unterschuss-Molverhältnis dann bei 0 liegt, oder aber nur in solchen Mengen, dass der entsprechende Wert mindestens unter 0,4 liegt. Da sich der Unterschuss auf das im hergestellten Zeolith vorliegende Si/Al-Verhältnis bezieht und dieses Verhältnis für die aluminiumreichen Alumosilikat-Zeolithe von 1 bis 5 variieren kann, ist auch eine abgestufte Angabe des Unterschussquotienten Al/(Al+Si) sinnvoll. Hierzu finden sich in der der Beschreibung folgenden Tabelle 1 entsprechenden Angaben, woraus sich ein Zusammenhang zwischen dem Aluminium-Unterschuss (Al/(Al+Si)) in der Reaktionsdispersion und der Zeolith-Zusammensetzung (abgerundete Angaben) ergibt. Es hat sich als vorteilhaft erwiesen, wenn das angesprochene Molverhältnis unter 0,05, insbesondere unter 0,02 liegt. Es kann besonders bevorzugt sein, wenn das Unterschuss-Molverhältnis 0 beträgt, wenn die wässrige Reaktionsdispersion keine AI-Quelle unmittelbar enthält.

Diese Unterschuss-Anforderung ist technologisch wie folgt zu erklären. Hierdurch läuft eine in-situ-Aufkristallisation der besagten Schicht auf das aluminiumhaltige metallische Substrat ab. Diese Aufkristallisation ist ein wesentlicher Grund dafür, dass das Verfahrenserzeugnis die wünschenswerten Eigenschaften zeigt, insbesondere eine gute Haftung der ausgebildeten Zeolith-Schicht auf der Oberfläche des aluminiumhaltigen metallischen Substrats. Beträgt dieser Unterschuss beispielsweise 0, dann bedeutet das, dass das netzwerkbildende Aluminium zur Ausbildung der aufkristallisierten Zeolith-Schicht allein dem aluminiumhaltigen metallischen Substrat entzogen wird. Dabei wird das elementare Aluminium zum Al³⁺ oxidiert und im wässrigen Reaktionsmedium dabei äquivalent Wasserstoff gebildet. Das Al³⁺ liegt dann primär mit (OH)⁻ als Gegenion im Bereich der Substratoberfläche vor und kann dort weiterreagieren. Dies führt zu der besonders guten Verankerung zwischen Oberfläche des aluminiumhaltigen Substrats und dem ausgebildeten Alumosilikat-Zeolith. Sehr detailliert hat sich die WO 2006/084211 A mit dem angesprochenen Unterschuss-Molverhältnis befasst, die vorstehend bereits angesprochen wurde und auf die verwiesen sei.

Von besonderer Bedeutung ist es bei der Verwirklichung der erfindungsgemäßen Verfahrenslehre, bei der Wahl der erforderlichen bzw. bevorzugten Bedingungen ein besonderes Augenmerk darauf zu richten, dass das aluminiumhaltige Substrat keiner zerstörenden Auflösung unterliegt, um den erfindungsgemäß angestrebten Erfolg zu erreichen. Insbesondere ist es dabei wichtig, dass das Substrat nach Abschluss des Verfahrens noch den Anforderungen genügt, die bei späteren Anwendungen gestellt sind. So sollte es weiterhin die erforderliche mechanische Stabilität bzw. die gewünschte Integrität in seiner Formgebung aufweisen.

Wie gezeigt, enthält die eingesetzte wässrige Reaktionsdispersion eine Si-Quelle. Hier sind keine relevanten Beschränkungen gegeben. Vorzugsweise handelt es sich um Kieselsäure, Silikate und/oder Kieselsäureester. Für den Fall, dass zur praktischen Ausführung des erfindungsgemäßen Verfahrens in die wässrige Reaktionsdispersion unter Beachtung der angesprochenen Anforderungen eine AI-Quelle gegeben wird, ist es von Vorteil, wenn es sich dabei um ein Aluminiumoxidhydrat, insbesondere Pseudoböhmit, und/oder Aluminiumaluminat handelt.

Bei der Durchführung des erfindungsgemäßen Verfahrens wird die bestehende wässrige Reaktionsdispersion alkalisch eingestellt, da andernfalls die Schicht eines aluminiumreichen metallischen Alumosilikat-Zeoliths nicht entsteht. Es ist dem Fachmann weitgehend freigestellt, wie er den pH-Wert der wässrigen Reaktionsdispersion alkalisch einstellt. Hierbei kann es sich insbesondere um Natriumhydroxid, Kaliumhydroxid, Amine, basische Na-Salze und/oder um Natriumaluminat handeln. Es ist bevorzugt, dass der pH-Wert der wässrigen Reaktionsdispersion auf mehr als 9 und/oder weniger als 13,8 eingestellt wird, insbesondere bei Al-Legierungen mit einem Al-Gehalt von mehr als 90%.

Es ist im Einzelfall vorteilhaft, dass kolloidale Quellen des Siliziums und/oder des Aluminiums herangezogen werden. Hierbei kann es zweckmäßig sein, zu deren Mineralisation Fluoridsalze oder Flourwasserstoffsäure hinzuzugeben, wobei bedacht werden muss, dass die wässrige Reaktionsdispersion eines pH-Wert von mehr als 7 aufweisen muss.

Darüber hinaus kann es vorteilhaft sein, wenn die wässrige Reaktionsdispersion ein organisches Templat bzw. ein organisches strukturdirigierendes Agens enthält, wobei es sich insbesondere um Amine bzw. Ammoniumsalze oder Kronenether handelt. Die Funktion derartiger Substanzen sind bekannt. Sie werden in der Literatur u.a. auch als *"Schablonenmolekül"* und *"Templatmolekül"* bezeichnet (vgl. Stephen G. Wilson, "Templating in Molecular Seive Synthesis" (von Elesivier Science P.V.)).

In Einzelfällen kann es bevorzugt sein, die Kristallbildung bei der Ausbildung der Schicht des aluminiumreichen Alumosilikat-Zeoliths bei der Durchführung des erfindungsgemäßen Verfahrens zu beschleunigen. Das ist besonders dann vorteilhaft, wenn die zum Einsatz kommende Reaktionsdispersion eine hohe Aggresivität gegenüber dem aluminiumhaltigen Substrat aufweist. In diesem Fall ist es zweckmäßig, um schneller eine geschlossene Zeolithschicht zu erhalten, Kristallisationskeime oder ein gealtertes Gel hinzuzugeben. Bei einem gealterten Gel handelt es sich um eine Reaktionsdispersion, die befähigt ist, den jeweiligen Zielzeolithen der Schicht in Pulverform zu bilden und die sich nach mehreren Stunden bei Raumtemperatur bereits in der Keimbildungsphase der Zeolithentwicklung befindet, ohne jedoch zur Zeolithwachstumsphase zu gelangen. Die hohe Viskosität des Gels erlaubt es zusätzlich, die Kristallisationskeime direkt auf das aluminiumhaltige metallische Substrat aufzubringen.

Das erfindungsgemäße Verfahren wird vorzugsweise bei erhöhter Temperatur durchgeführt. Zweckmäßig ist es, dass die wässrige Reaktionsdispersion und das darin befindliche aluminiumhaltige metallische Substrat auf eine Temperatur von 50 bis 200°C, insbesondere von 70 bis 130°C, erwärmt werden. Für den Fall, dass die Temperatur von 100°C überschritten wird, kann es erforderlich sein, die Reaktion in einem geschlossenen System, demzufolge in einem Autoklaven, durchzuführen.

Die Erfinder haben erkannt, dass es für eine vorteilhafte Ausführung des erfindungsgemäßen Verfahrens besonders zweckmäßig ist, dem Verhältnis der Oberfläche des aluminiumhaltigen Substrats zu dem Volumen der wässrigen Reaktionsdispersion (in cm²/cm³) Aufmerksamkeit zuzuwenden. Es erweist sich als bevorzugt, wenn dieses Verhältnis auf 0,03 bis 20, insbesondere auf 0,1 bis 15 und ganz besonders bevorzugt auf 1 bis 8 eingestellt wird. Ist es kleiner als 0,1, insbesondere kleiner als 0,03, dann steht zu viel wässrige Reaktionsdispersion zur Verfügung, die sich auf das aluminiumhaltige metallische Substrat zerstörend auswirken kann. Zudem zeigte sich, dass ein über dem aluminiumhaltigen Substrat stehendes, zu großes Volumen das Schichtwachstum zugunsten des unerwünschten Kristallwachstums in der Reaktionsdispersion verringert. Wird der Wert von 15, insbesondere von 20 überschritten, dann stehen nicht genug Reaktionspartner für eine ausreichende Bedeckung des aluminiumhaltigen Substrats mit Alumosilikat-Zeolith-Kristallen zur Verfügung.

Es könnte sich die Frage stellen, wie stark die erfindungsgemäß, auf dem aluminiumhaltigen metallischen Substrat ausgebildete Zeolith-Schicht ist. Bestimmend ist hierfür die spätere Anwendung des erhaltenen Erzeugnisses. Hier zeigt die Erfindung eine große Flexibilität. Bei ihrer Ausführung kann die Schichtdicke wünschenswert eingestellt werden und beispielsweise bei etwa 5 bis 50 µm liegen. Zur Ausbildung besonders starker Beschichtungen ist es zweckmäßig, mit frischer wässriger Reaktionsdispersion das Schichtwachstum weiterzuführen.

Nach der Aufkristallisation des aluminiumreichen Alumosilikat-Zeoliths auf das aluminiumhaltige metallische Substrat ist es lediglich erforderlich, das beschichtete Substrat aus der verbliebenen Reaktionsdispersion zu entnehmen. Zweckmäßigerweise wird verbliebene Reaktionsdispersion von dem beschichteten Substrat durch Waschen entfernt. Für den Fall, dass das erfindungsgemäße Verfahren ein organisches strukturdirigierendes Agens bzw. ein organisches Templat heranzieht, besteht die Möglichkeit, dieses Agens bzw. Templat, gegebenenfalls nach Waschen, durch eine Kalzinierung weitergehend zu entfernen.

Vorstehend wurde das erfindungsgemäße Verfahren detailliert beschrieben. Das danach erhaltene Erzeugnis in Form des Alumosilikat-Zeolith-beschichteten aluminiumhaltigen metallischen Substrats ist neu und wird in dem beschriebenen Stand der Technik nicht offenbart. Demzufolge richtet sich die Erfindung auch auf ein Zeolith-beschichtetes aluminiumhaltiges metallisches Substrat, das eine Schicht aus einem aluminiumreichen Alumosilikat-Zeolith mit einem Si/Al-Verhältnis von weniger als 5 aufweist, insbesondere von weniger als 4, wobei es ganz besonders bevorzugt ist, wenn der Wert weniger als 3,5 beträgt. Die vorstehenden Ausführungen zu diesem Verhältnis gelten hier entsprechend. Das Gleiche gilt für die Art der aluminiumreichen Alumosilikat-Zeolithe, die für die Erfindung bevorzugt sind. Die angegebenen Werte gelten für Zeolithe in der Syntheseform ohne Nachbehandlungen.

Die erfindungsgemäß erhaltenen Alumosilikat-Zeolith-beschichteten aluminiumhaltigen metallischen Substrate sind vielfältigen Verwendungsmöglichkeiten zugänglich, vorzugsweise in sorptionsbasierenden Anwendungsbereichen, insbesondere zur heterogenen Katalyse, bei Separations- und Reinigungsprozessen, in Sorptionswärmepumpen, im Zusammenhang mit immobilisierten Katalysatoren sowie in der Mikroreaktionstechnik. Diese Aufzählung ist nicht beschränkend.

Zusammenfassend lassen sich die Vorteile, die mit der vorliegenden Erfindung gegenüber dem Stand der Technik erreichen lassen, wie folgt darstellen: 1. Es sind dünne, hydrophile Alumosilikat-Zeolith-Schichten auf aluminiumhaltigen metallischen Substraten, wobei Al-reiche Alumosilikate vorliegen, zugänglich. Diese tragen mehr Gitterladung und sind deshalb deutlich hydrophiler als Al-arme Zeolithe. 2. Es sind klassische Adsorptionsmittel, wie FAU, erstmals als kompakte Schichten mit fester, direkter Bindung auf metallischem Aluminium (sehr gute Wärmeleitung) herstellbar. 3. Es handelt sich bei dem erfindungsgemäßen Verfahren um eine Einschrittsynthese, wobei keine Fremdzeolithschicht als Bindungsmatrix nötig ist. 4. Viele der erfindungsgemäß in Betracht zu ziehenden Alumosilikat-Zeolithe sind ohne Templat und deshalb ohne Kalzinierung zugänglich. 5. Es wird eine Schicht eines aluminiumreichen Alumosilikat-Zeoliths sehr fest auf einem metallischen Al-Träger ausgebildet.

Anhand der vorstehenden Darstellung des erfindungsgemäßen Verfahrens, insbesondere unter Berücksichtigung der konkretisierenden Ausführungen, und unter Berücksichtigung der nachfolgenden erläuternden Beispiele ist der Fachmann problemlos in der Lage, die Erfindung mit Erfolg auszuführen.

**Tabelle 1: Beispiele zur Abhängigkeit des Aluminium-Unterschusses Al/(Al+Si) in der Reaktionsdispersion von der Zeolithzusammensetzung (Angaben abgerundet)**

| | Ohne Unterschuss | Unterschuss | | |
|---|---|---|---|---|
| Verhältnis im Zeolith Si/Al | 100 % vom theoret. Al-Anteil | 80 % vom theoret. AlAnteil | 10 % vom theoret. Al-Anteil | 0 % vom theoret. Al-Anteil |
| | Al/(Al+Si) | Al/(Al+Si) | Al/(Al+Si) | Al/(Al+Si) |
| 1,00 | 0,50 | 0,40 | 0,05 | 0 |
| 2,00 | 0,33 | 0,27 | 0,03 | 0 |
| 3,00 | 0,25 | 0,20 | 0,03 | 0 |
| 4,00 | 0,20 | 0,16 | 0,02 | 0 |
| 5,00 | 0,17 | 0,13 | 0,02 | 0 |

### Beispiel 1:

### Ansatzpräparation

Der Reaktionsansatz wurde ausgehend von zwei Lösungen hergestellt.

### Lösung A:

6 g Natriummetasilicat-Pentahydrat (Na₂O₃Si · 5H₂O, von der Fa. Aldrich) wurden unter Rühren zu 70 g H₂O gegeben und verrührt, bis eine klare Lösung erhalten wurde. Anschließend wurden 42,35 g Triethanolamin (C₆H₁₅NO₃, ≥99 %, von der Fa. Carl Roth GmbH) zur Lösung gegeben und etwa 30 Minuten lang gerührt.

### Lösung B:

0,78 g NaOH (≥99%, von der Fa. Carl Roth GmbH) wurden mit 49,34 g H₂O vermischt. Die Mischung wurde gerührt, bis eine klare Lösung erhalten wurde. Lösung B wurde unter Rühren zur Lösung A gegeben und etwa 30 Minuten homogenisiert. Der resultierende Reaktionsansatz hatte einen pH-Wert von 13,1 und folgende Zusammensetzung in Oxidverhältnissen: 1,0 SiO₂ : 1,2 Na₂O : 5,9 C₆H₁₅NO₃ : 140 H₂O.

### Synthese

Die Aluminiumträger wurden mit Aceton gereinigt, getrocknet, in Edelstahlautoklaven platziert und mit der Syntheselösung bedeckt. Die Autoklaven wurden verschlossen und a) 96 h (Beispiel 1a) bzw. b) 163 h (Beispiel 1b) lang in einem Umluftofen auf 95 °C erhitzt. Danach wurden die Autoklaven dem Ofen entnommen, abgekühlt und geöffnet. Die Aluminiumträger wurden entnommen, mit deionisiertem Wasser gereinigt und bei Raumtemperatur getrocknet.

### Analysen

Die hydrothermal behandelten Aluminiumträger wurden mittels Röntgenpulverdiffraktometrie (XRD), Rasterelektronenmikroskopie (REM) und energiedispersiver Röntgenspektroskopie (EDX) analysiert. Die Figuren zeigen dabei folgendes:

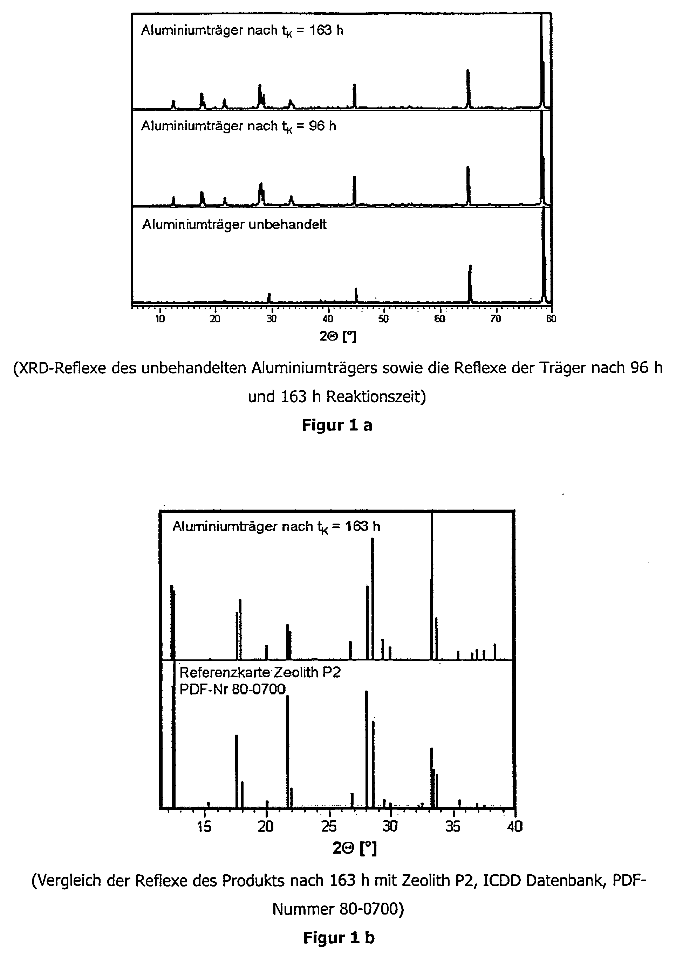

Figur 1a zeigt die Röntgendiffraktogramme des unbehandelten und der für 96 h und 163 h behandelten Aluminiumträger. Zusätzlich zu den Aluminiumreflexen zeigen die Diffraktogramme der hydrothermal behandelten Träger Peaks der Gismondit (GIS)-Zeolithstruktur.
Figur 1b zeigt den Vergleich der Reflexe des Produkts nach 163 h mit Zeolith P2, ICDD Datenbank, PDF-Nummer 80-0700,

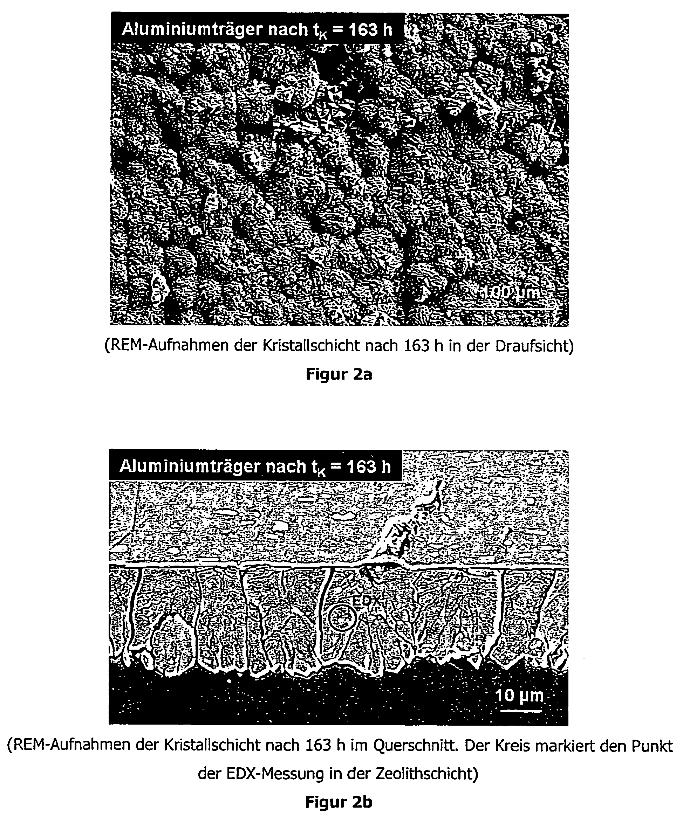

Figur 2a REM-Aufnahmen der Kristallschichten in der Draufsicht und
Figur 2b im Querschnitt sowie
Figur 2c die EDX-Analyse der Kristallschicht, wobei ein Si/Al-Verhältnis von 2,3 bestimmt wurde.

### Beispiel 2:

### Ansatzpräparation

Der Reaktionsansatz wurde aus zwei Lösungen hergestellt.

### Lösung A:

7,5 g Natronwasserglas (25,5 bis 28,5 % SiO₂, von der Fa. AppliChem GmbH) wurden unter Rühren zu 75 g H₂O gegeben und verrührt, bis eine klare Lösung erhalten wurde. Anschließend wurden 10,29 g Triethanolamin (C₆H₁₅NO₃, ≥99 %, von der Fa. Carl Roth GmbH) zur Lösung zugegeben. Etwa 30 Minuten lang wurde homogenisiert.

### Lösung B:

1,03 g NaOH (≥99%, von der Fa. Carl Roth GmbH) wurden zu 30,52 g H₂O gegeben und verrührt, bis eine klare Lösung erhalten wurde. Lösung B wurde unter Rühren zur Lösung A gegeben. Es wurde etwa 30 Minuten lang homogenisiert. Der resultierende Reaktionsansatz hatte einen pH-Wert von 12,7 und folgende Zusammensetzung in Oxidverhältnissen: 1,0 SiO₂ : 0,66 Na₂O : 2,0 C₆H₁₅NO₃: 180 H₂O.

### Synthese

Die hydrothermale Synthese wurde wie in Beispiel 1 beschrieben durchgeführt.

### Analysen

Die hydrothermal behandelten Aluminiumträger wurden mittels Röntgenpulverdiffraktometrie (XRD), Rasterelektronenmikroskopie (REM) und energiedispersiver Röntgenspektroskopie (EDX) analysiert. Die Figuren zeigen dabei folgendes:

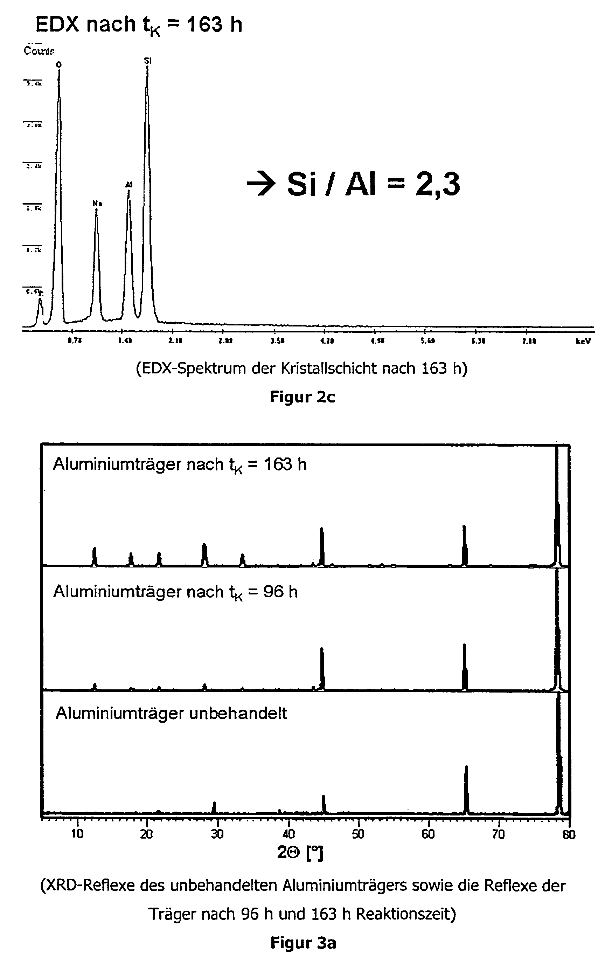

Figur 3a zeigt die Röntgendiffraktogramme des unbehandelten und der für 96 h und 163 h behandelten Aluminiumträger. Zusätzlich zu den Aluminiumreflexen zeigen die Diffraktogramme der hydrothermal behandelten Träger Peaks der Gismondit (GIS)-Zeolithstruktur.

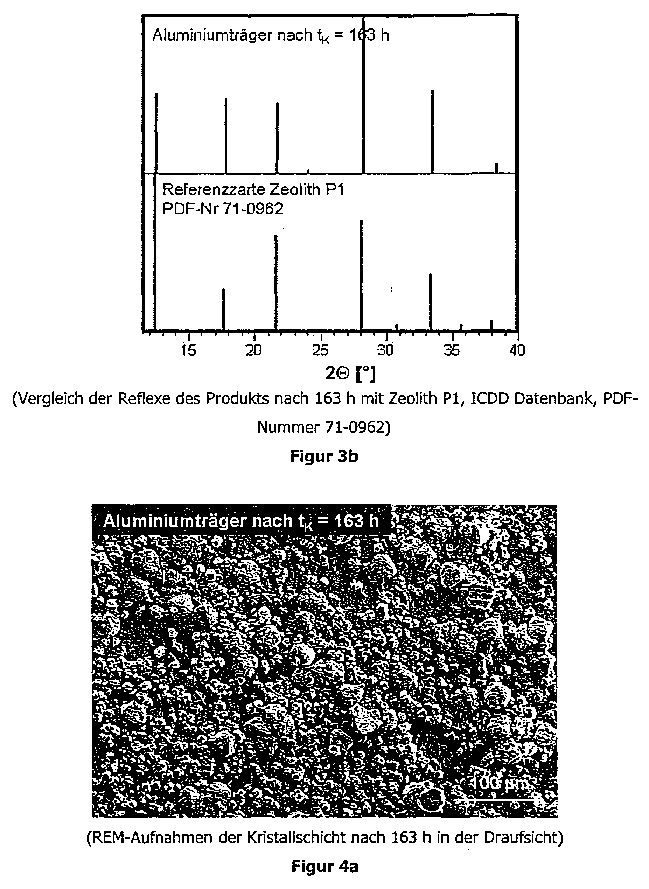

Figur 3b zeigt den Vergleich der Reflexe des Produkts nach 163 h mit Zeolith P1, ICDD Datenbank, PDF-Nummer 71-0962,
Figur 4a REM-Aufnahmen der Kristallschichten in der Draufsicht und

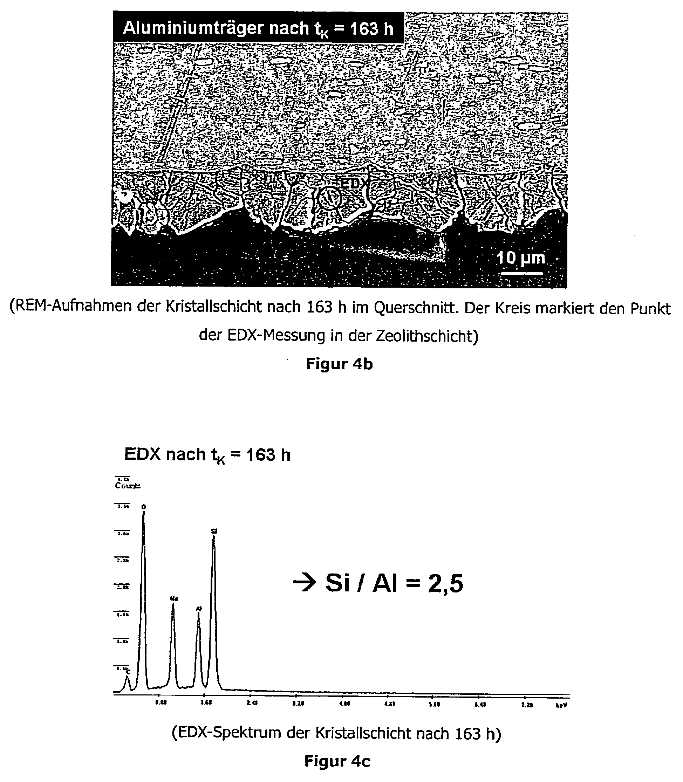

Figur 4b im Querschnitt sowie
Figur 4c die EDX-Analyse der Kristallschicht. Hier wurde ein Si/Al-Verhältnis von 2,5 bestimmt.

## Patentansprüche

1. Verfahren zur Ausbildung einer Alumosilikat-Zeolith-Schicht auf einem aluminiumhaltigen metallischen Substrat aus metallischem Aluminium oder einer Aluminiumlegierung, das in eine wässrige Reaktionsdispersion überführt wird, in der als netzwerkbildende Elemente Silizium und gegebenenfalls Aluminium enthalten sind, wobei unabhängig davon, ob Aluminium in der wässrigen Reaktionsdispersion vorliegt oder nicht, das Molverhältnis zwischen dem Aluminium in der wässrigen Reaktionsdispersion zur Summe der in der wässrigen Reaktionsdispersion enthaltenen bezeichneten netzwerkbildenden Elemente unter 0,4 liegt, wobei dann, wenn Aluminium in der wässrigen Reaktionslösung nicht vorliegt, das da r-gestellte Unterschuss-Molverhältnis 0 beträgt, und die das aluminiumhaltige metallische Substrat enthaltende wässrige Reaktionsdispersion erwärmt und dem aluminiumhaltigen metallischen Substrat für den Alumosilikat-Zeolith-Bildungsprozess Aluminium entzogen und die Schicht eines Alumosilikat-Zeoliths auf dem aluminiumhaltigen metallischen Substrat durch in-situ-Aufkristallisation ausgebildet wird, **dadurch gekennzeichnet, dass** auf dem aluminiumhaltigen metallischen Substrat eine Schicht eines aluminiumreichen Alumosilikat-Zeoliths eines Si/Al-Verhältnisses von 1 bis weniger als 5 ausgebildet wird, indem in die wässrige Reaktionsdispersion eine Si-Quelle in einer zur Ausbildung des Si/Al-Verhältnisses von 1 bis weniger als 5 ausreichenden Menge und eine AI-Quelle, die der Anforderung des molaren Unterschusses in der wässrigen Reaktionsdispersion genügt, sowie das aluminiumhaltige metallische Substrat eingebracht werden, wobei das Verhältnis der Oberfläche des aluminiumhaltigen Substrats zu dem Volumen der wässrigen Reaktionsdispersion (in cm²/cm³) zwischen 0,03 und 20 eingestellt wird, der pH-Wert der wässrigen Reaktionsdispersion alkalisch eingestellt und die Schicht des aluminiumreichen Alumosilikat-Zeoliths auf das aluminiumhaltige Substrat kristallisiert wird.

2. Verfahren nach Anspruch 1, **dadurch gekennzeichnet, dass** Aluminiumoxidhydrat, insbesondere Pseudoböhmit, und/oder Natriumaluminat neben dem im Substrat enthaltenen Aluminium als AI-Quelle einsetzt werden.

3. Verfahren nach Anspruch 1 oder 2, **dadurch gekennzeichnet, dass** Kieselsäure, Silikate und/oder Kieselsäureester als Si-Quelle eingesetzt werden.

4. Verfahren nach einem der vorhergehenden Ansprüche, **dadurch gekennzeichnet, dass** zur Einstellung alkalischer Bedingungen Natriumhydroxid, Kaliumhydroxid, Amine, basische Na-Salze und/oder Natriumaluminat herangezogen werden.

5. Verfahren nach mindestens einem der vorhergehenden Ansprüche, **dadurch gekennzeichnet, dass** der pH-Wert der wässrigen Reaktionsdispersion auf mehr als 9 und/oder weniger als 13,8, insbesondere bei Al-Legierungen mit einem Al-Gehalt von mehr als 90 % eingestellt wird.

6. Verfahren nach mindestens einem der vorhergehenden Ansprüche, **dadurch gekennzeichnet, dass** das Verhältnis der Oberfläche des aluminiumhaltigen Substrats zu dem Volumen der wässrigen Reaktionsdispersion (in cm²/cm³) zwischen 1 und 8 eingestellt wird.

7. Verfahren nach mindestens einem der vorhergehenden Ansprüche, **dadurch gekennzeichnet, dass** solche aluminiumreichen Alumosilikat-Zeolithe ausgebildet werden, bei denen das Si/Al-Verhältnis kleiner als 4, insbesondere kleiner als 3,5 ist.

8. Verfahren nach mindestens einem der vorhergehenden Ansprüche, **dadurch gekennzeichnet, dass** auf dem aluminiumhaltigen Substrat eine Schicht aus einem aluminiumreichen Alumosilikat-Zeolith in Form von LTA, FAU, CHA, MOR oder GIS ausgebildet wird.

9. Verfahren nach mindestens einem der vorhergehenden Ansprüche, **dadurch gekennzeichnet, dass** das Molverhältnis des in der wässrigen Reaktionsdispersion im Unterschuss vorliegenden Aluminiums zur Summe der in der wässrigen Reaktionsdispersion enthaltenen netzwerkbildenden Elemente Silizium und Aluminium unter 0,05, insbesondere unter 0,02 liegt.

10. Verfahren nach mindestens einem der vorhergehenden Ansprüche, **dadurch gekennzeichnet, dass** die wässrige Reaktionsdispersion ein organisches Templat bzw. organisches strukturdirigierendes Agens enthält.

11. Verfahren nach Anspruch 10, **dadurch gekennzeichnet, dass** das organische strukturdirigierende Agens in Form von Aminen bzw. Ammoniumsalzen oder Kronenethern vorliegt.

12. Verfahren nach mindestens einem der vorhergehenden Ansprüche, **dadurch gekennzeichnet, dass** im Falle kolloidaler Quellen des Siliziums und/oder des Aluminiums zu deren Mineralisation Fluoridsalze oder Fluorwasserstoffsäure zugegeben werden.

13. Verfahren nach mindestens einem der vorhergehenden Ansprüche, **dadurch gekennzeichnet, dass** die wässrige Reaktionsdispersion und das darin befindliche aluminiumhaltige metallische Substrat auf eine Temperatur von 50 bis 200°C, insbesondere von 70 bis 130°C erwärmt werden.

14. Verfahren nach mindestens einem der vorhergehenden Ansprüche, **dadurch gekennzeichnet, dass** zur Beschleunigung der Kristallbildung bei der Ausbildung der Schicht des aluminiumreichen Alumosilikat-Zeoliths Kristallisationskeime oder gealtertes Gel hinzugegeben werden.

15. Zeolith-beschichtetes aluminiumhaltiges Substrat, erhältlich nach einem Verfahren nach mindestens einem der vorhergehenden Ansprüche, **dadurch gekennzeichnet, dass** es eine Schicht aus einem aluminiumreichen Alumosilikat-Zeolith mit einem Si/Al-Verhältnis von 1 bis weniger als 5 und eine Wassersorptionskapazität bei 35°C von mindestens 12% oder mehr, bezogen auf die reine Masse des Zeolithen, aufweist.

16. Zeolith-beschichtetes aluminiumhaltiges Substrat nach Anspruch 15, **dadurch gekennzeichnet, dass** das Si/Al-Verhältnis weniger als 4, insbesondere weniger als 3,5 beträgt.

17. Zeolith-beschichtetes aluminiumhaltiges Substrat nach Anspruch 15 oder 16, **dadurch gekennzeichnet, dass** der aluminiumreiche Alumosilikat-Zeolith in Form von LTA, FAU, CHA, MOR oder GIS vorliegt.

18. Verwendung des mit einem aluminiumreichen Alumosilikat-Zeolith beschichteten aluminiumhaltigen Substrats nach einem der Ansprüche 15 bis 17 in sorptionsbasierenden Anwendungsbereichen.

19. Verwendung nach Anspruch 18 zur heterogenen Katalyse, bei Separations- und Reinigungsprozessen, in Sorptionswärmepumpen, im Zusammenhang mit immobilisierten Katalysatoren sowie in der Mikroreaktionstechnik.

## Claims

1. A method of forming an aluminosilicate-zeolite layer on an aluminium-containing metallic substrate of metallic aluminium or an aluminium alloy, which is conveyed into an aqueous reaction dispersion, in which the elements silicon and optionally aluminium constituting network-forming elements are contained, wherein, regardless of whether aluminium is present in the aqueous reaction dispersion or not, the molar ratio between the aluminium in the aqueous reaction dispersion to the sum of the indicated network-forming elements contained in the aqueous reaction dispersion is less than 0.4, wherein, when aluminium is not present in the aqueous reaction solution, the described shortfall molar ratio is 0 and the aqueous reaction dispersion containing the aluminium-containing metallic substrate is heated and aluminium removed from the aluminium-containing metallic substrate for the aluminosilicate-zeolite formation process and the layer of an aluminosilicate-zeolite is formed on the aluminium-containing metallic substrate by in-situ crystallisation, **characterised in that** a layer of aluminium-rich aluminosilicate-zeolite with an Si/Al ratio of 1 to less than 5 is formed on the aluminium-containing metallic substrate by introducing into the aqueous reaction dispersion an Si source in an amount sufficient to form the Si/Al ratio of 1 to less than 5 and an Al source, which satisfies the requirement of the molar shortfall in the aqueous reaction dispersion as well as the aluminium-containing metallic substrate, wherein the ratio of the surface area of the aluminium-containing substrate to the volume of the aqueous reaction dispersion (in cm²/cm³) is set to between 0.03 and 20, the pH value of the aqueous reaction dispersion is set to be alkaline and the layer of the aluminium-rich aluminosilicate-zeolite is crystallised onto the aluminium-containing substrate.

2. A method as claimed in Claim 1, **characterised in that** aluminium oxide hydrate, particularly pseudoboehmite, and/or sodium aluminate, is used as the Al source in addition to the aluminium contained in the substrate.

3. A method as claimed in Claim 1 or 2, **characterised in that** silica, silicate and/or silicate ester are used as the Si source.

4. A method as claimed in one of the preceding claims, **characterised in that** sodium hydroxide, potassium hydroxide, amines, basic Na salts and/or sodium aluminate are used to set the alkaline conditions.

5. A method as claimed in at least one of the preceding claims, **characterised in that** the pH value of the aqueous reaction dispersion is set to more than 9 and/or less than 13.8, particularly with Al alloys with an Al content of more than 90%.

6. A method as claimed in at least one of the preceding claims, **characterised in that** the ratio of the surface area of the aluminium-containing substrate to the volume of the aqueous reaction dispersion (in cm²/cm³) is set to between 1 and 8.

7. A method as claimed in at least one of the preceding claims, **characterised in that** aluminium-rich aluminosilicate-zeolites are formed, in which the Si/Al ratio is smaller than 4, particularly smaller than 3.5.

8. A method as claimed in at least one of the preceding claims, **characterised in that** a layer of an aluminium-rich aluminosilicate-zeolite in the form of LTA, FAU, CHA, MOR or GIS is formed on the aluminium-containing substrate.

9. A method as claimed in at least one of the preceding claims, **characterised in that** the molar ratio of the aluminium present in a limited amount in the aqueous reaction dispersion to the sum of the network-forming elements silicon and aluminium contained in the aqueous reaction dispersion is less than 0.05, particularly less than 0.02.

10. A method as claimed in at least one of the preceding claims, **characterised in that** the aqueous reaction dispersion contains an organic template or an organic structure-controlling agent.

11. A method as claimed in Claim 10, **characterised in that** the organic structure-controlling agent is present in the form of amines or ammonium salts or crown ethers.

12. A method as claimed in at least one of the preceding claims, **characterised in that** if colloidal sources of the silicon and/or of the aluminium are used, fluoride salts or hydrofluoric acid are added for their mineralisation.

13. A method as claimed in at least one of the preceding claims, **characterised in that** the aqueous reaction dispersion and the aluminium-containing metallic substrate situated therein are heated to a temperature of 50 to 200°C, particularly from 70 to 130°C.

14. A method as claimed in at least one of the preceding claims, **characterised in that** crystallisation nuclei or aged gel are added to accelerate the crystal formation during the formation of the layer of the aluminium-rich aluminosilicate-zeolite.

15. A zeolite-coated, aluminium-containing substrate obtainable by a method as claimed in at least one of the preceding claims, **characterised in that** it includes a layer of an aluminium-rich aluminosilicate-zeolite with an Si/Al ratio of 1 to less than 5 and a water sorption capacity at 35°C of at least 12% or more with respect to the pure mass of the zeolites.

16. A zeolite-coated, aluminium-containing substrate as claimed in Claim 15, **characterised in that** the Si/Al ratio is less than 4, particularly less than 3.5.

17. A zeolite-coated, aluminium-containing substrate as claimed in Claim 15 or 16, **characterised in that** the aluminium-rich aluminosilicate-zeolite is present in the form of LTA, FAU, CHA, MOR or GIS.

18. Use of the aluminium-containing substrate coated with an aluminium-rich aluminosilicate-zeolite as claimed in one of Claims 15 to 17 in sorption-based fields of use.

19. Use as claimed in Claim 18 for heterogeneous catalysis, in separation and cleaning processes, in sorption heat pumps in conjunction with immobilised catalysts and in microreaction technology.

## Revendications

1. Procédé de formation d'une couche d'aluminosilicate zéolithe sur un substrat métallique contenant de l'aluminium, lequel substrat est composé d'aluminium métallique ou d'un alliage d'aluminium et est introduit dans une dispersion réactionnelle aqueuse contenant, comme éléments de réticulation, du silicium et éventuellement de l'aluminium, le rapport molaire entre l'aluminium contenu dans la dispersion réactionnelle aqueuse et la somme desdits éléments de réticulation contenus dans la dispersion réactionnelle aqueuse, que la dispersion réactionnelle aqueuse contienne ou non de l'aluminium, étant inférieur à 0,4, le rapport molaire en quantité déficitaire présenté, lorsque la solution réactionnelle aqueuse ne contient pas d'aluminium, atteignant 0, et la dispersion réactionnelle aqueuse contenant le substrat métallique contenant de l'aluminium étant chauffée, et, pour le procédé de formation de l'aluminosilicate zéolithe, de l'aluminium étant retiré du substrat métallique contenant de l'aluminium et une couche d'aluminosilicate zéolithe étant formée par cristallisation in-situ sur le substrat métallique contenant de l'aluminium, **caractérisé en ce qu'**une couche d'une aluminosilicate zéolithe riche en aluminium présentant un rapport Si/Al de 1 à moins de 5 est formée sur le substrat métallique contenant de l'aluminium, par introduction dans la dispersion réactionnelle aqueuse d'une source de silicium en quantité suffisante pour obtenir le rapport Si/Al de 1 à moins de 5 et d'une source d'aluminium satisfaisant à l'exigence de déficit molaire dans la dispersion réactionnelle aqueuse, ainsi que du substrat métallique contenant de l'aluminium, le rapport entre la surface du substrat contenant de l'aluminium et le volume de la dispersion réactionnelle aqueuse (en cm²/cm³) étant ajusté entre 0,03 et 20, le pH de la dispersion réactionnelle aqueuse étant ajusté de manière à être alcalin et la couche de l'aluminosilicate zéolithe riche en aluminium se cristallisant sur le substrat contenant de l'aluminium.

2. Procédé selon la revendication 1, **caractérisé en ce que** de l'hydrate d'oxyde d'aluminium, en particulier de la pseudo-boehmite, et/ou de l'aluminate de sodium sont utilisés comme source d'aluminium, en plus de l'aluminium contenu dans le substrat.

3. Procédé selon la revendication 1 ou 2, **caractérisé en ce que** de l'acide silique, des silicates et/ou des esters d'acide silique sont utilisés comme source de silicium.

4. Procédé selon l'une quelconque des revendications précédentes, **caractérisé en ce que** pour ajuster les conditions alcalines, on utilise de l'hydroxyde de sodium, de l'hydroxyde de potassium, une amine, des sels basiques de sodium et/ou de l'aluminate de sodium.

5. Procédé selon au moins l'une des revendications précédentes, **caractérisé en ce que** le pH de la dispersion réactionnelle aqueuse est ajusté à plus de 9 et/ou à moins de 13,8, en particulier lorsque des alliages d'aluminium présentant une teneur en aluminium supérieure à 90 % sont ajustés.

6. Procédé selon au moins l'une des revendications précédentes, **caractérisé en ce que** le rapport entre la surface du substrat contenant de l'aluminium et le volume de la dispersion réactionnelle aqueuse (en cm²/cm³) est ajusté entre 1 et 8.

7. Procédé selon au moins l'une des revendications précédentes, caractérisé en ce des aluminosilicates zéolithes riches en aluminium, avec lesquelles le rapport Si/Al est inférieur à 4, en particulier inférieur à 3,5, sont formées.

8. Procédé selon au moins l'une des revendications précédentes, **caractérisé en ce qu'**une couche constituée d'une aluminosilicate zéolithe riche en aluminium prenant la forme de LTA, de FAU, de CHA, de MOR ou de GIS est formée sur le substrat contenant de l'aluminium.

9. Procédé selon au moins l'une des revendications précédentes, **caractérisé en ce que** le rapport molaire entre l'aluminium présent en quantité excédentaire dans la dispersion réactionnelle aqueuse et la somme des éléments de réticulation silicium et aluminium contenus dans la dispersion réactionnelle aqueuse est inférieur à 0,05, en particulier inférieur à 0,02.

10. Procédé selon au moins l'une des revendications précédentes, **caractérisé en ce que** la dispersion réactionnelle aqueuse contient une matrice organique ou un agent chimique organique dirigeant la structure.

11. Procédé selon la revendication 10, **caractérisé en ce que** l'agent chimique organique dirigeant la structure se présente sous la forme d'amines ou de sels d'ammonium ou d'éthers couronne.

12. Procédé selon au moins l'une des revendications précédentes, **caractérisé en ce que** dans le cas de sources colloïdales du silicium et/ou de l'aluminium, des sels de fluorure ou un acide fluorhydrique sont ajoutés pour la minéralisation de ces dernières.

13. Procédé selon au moins l'une des revendications précédentes, **caractérisé en ce que** la dispersion réactionnelle aqueuse et le substrat métallique contenant de l'aluminium présent dans cette dernière sont chauffés à une température de 50 à 200°C, en particulier de 70 à 130°C.

14. Procédé selon au moins l'une des revendications précédentes, **caractérisé en ce que** pour ralentir la formation de cristaux lors de la constitution de la couche d'aluminosilicate zéolithe riche en aluminium, on ajoute des germes de cristallisation ou un gel vieilli.

15. Substrat contenant de l'aluminium et revêtu de zéolithe, obtenu selon un procédé selon au moins l'une des revendications précédentes, **caractérisé en ce qu'**il comprend une couche composée d'une aluminosilicate zéolithe riche en aluminium présentant un rapport Si/Ai de 1 à moins de 5 et une capacité d'absorption d'eau à 35°C d'au moins 12 % ou plus, rapporté à la masse pure de la zéolithe.

16. Substrat contenant de l'aluminium revêtu de zéolithe selon la revendication 15, **caractérisé en ce que** le rapport Si/Al est inférieur à 4, en particulier inférieur à 3,5.

17. Substrat contenant de l'aluminium revêtu de zéolithe selon la revendication 15 ou 16, **caractérisé en ce que** l'aluminosilicate zéolithe riche en aluminium se présente sous la forme de LTA, de FAU, de CHA, de MOR ou de GIS.

18. Utilisation du substrat contenant de l'aluminium revêtu d'aluminosilicate zéolithe riche en aluminium selon l'une quelconque des revendications 15 à 17 dans des domaines d'application basés sur la sorption.

19. Utilisation selon la revendication 18 pour la catalyse hétérogène, dans le cas de processus de séparation et de nettoyage, dans des pompes à chaleur à sorption, en relation avec des catalyseurs immobilisés, ainsi que dans la technique de micro-réaction.
